# EUROPEAN PATENT APPLICATION

(11) **EP 4 434 668 A1**
(43) Date of publication of application: **25.09.2024**
(21) Application number: 23796721.1
(22) Date of filing: 21.04.2023
(51) Int. Cl.: B23K 26/359, B23K 37/04, B23K 26/362

(54) **JIG, AND ELECTRODE MANUFACTURING SYSTEM COMPRISING SAME**

(30) Priority: 26.04.2022 KR 20220051692
(71) Applicant: LG Energy Solution, Ltd., Seoul 07335 (KR)
(72) Inventor: KIM, Sang-Yeol, Daejeon 34122 (KR); LEE, Seo-Jun, Daejeon 34122 (KR); PARK, Jong-Sik, Daejeon 34122 (KR); KIM, Hak-Kyun, Daejeon 34122 (KR); LEE, Je-Jun, Daejeon 34122 (KR)
(74) Representative: Goddar, Heinz J.
(86) International application number: PCT/KR2023/005500
(87) International publication number: WO 2023/211074

(57) **Abstract**

A jig according to an embodiment of the present disclosure is configured to support an electrode which is transported along a first direction, the electrode including a coated portion coated with an electrode active material and an uncoated portion not coated with the electrode active material, and includes a first support portion configured to support an area corresponding to the uncoated portion of the electrode and including a laser receiving portion at a location corresponding to an irradiation area of a laser for cutting the uncoated portion; and a second support potion configured to support an area corresponding to the coated portion of the electrode.

## Description

### TECHNICAL FIELD

The present disclosure relates to a jig and an electrode manufacturing system comprising the same.

The present application claims the benefit of Korean Patent Application No. 10-2022-0051692 filed on April 26, 2022 with the Korean Intellectual Property Office, the disclosure of which is incorporated herein by reference in its entirety.

### BACKGROUND ART

A process of partially cutting an electrode to manufacture an electrode assembly applied to a secondary battery may be applied. To cut the electrode, for example, laser cutting may be used. An electrode web of a large size may be cut into unit electrodes, or an electrode may be partially cut at a specific location into a desired shape.

A laser cutting machine for the electrode may include, for example, a drum type or a flying type.

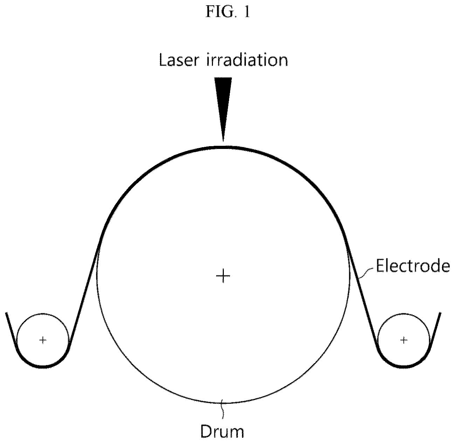

FIG. 1 schematically shows the drum type laser cutting machine. When the drum type machine is used, the drum directly supports an area of the electrode onto which a laser is irradiated, and thus it is possible to achieve stable cutting and prevent the electrode from moving during transport of the electrode. However, when this type machine is used, a space for installation of the drum is relatively large in size and laser irradiation is carried out in the area that is directly supported by the drum, and thus there is a likelihood of incomplete cutting and the drum may be damaged by the laser irradiation.

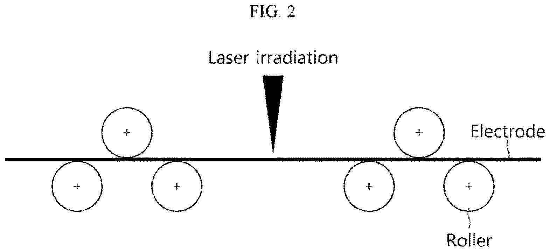

FIG. 2 schematically shows the flying type laser cutting machine. When the flying type machine is used, there are less spatial limitations than the drum type machine and the electrode may be completely cut by laser irradiation. However, when this type machine is used, large movements of the electrode may occur during transport of the electrode. When movements of the electrode occur, it is not easy to conduct laser irradiation with accurate focal length, resulting in low quality of the electrode.

Accordingly, there is a need for the development of a jig designed to minimize movements of the electrode during transport of the electrode in electrode machining, prevent an excessive increase in space occupied by the machine, and prevent damage of the machine induced by laser irradiation and incomplete cutting by laser irradiation.

### DISCLOSURE

### Technical Problem

The present disclosure is designed to solve the above-described problems, and therefore the present disclosure aims to minimize movements of an electrode during transport in electrode machining.

In another aspect, the present disclosure aims to prevent an excessive increase in space occupied by a machine.

In another aspect, the present disclosure aims to prevent damage of the machine induced by laser irradiation.

In another aspect, the present disclosure aims to prevent cutting incomplete by laser irradiation.

In another aspect, the present disclosure aims to prevent damage to the electrode during transport of the electrode.

In another aspect, the present disclosure aims to prevent damage to the machine due to friction in transport of the electrode.

However, the technical problem of the present disclosure to be solved is not limited to the above-described problems, and these and other problems will be clearly understood by those skilled in the art from the following description.

### Technical Solution

To solve the above-described problem, a jig according to an embodiment of the present disclosure is configured to support an electrode which is transported along a first direction, the electrode including a coated portion coated with an electrode active material and an uncoated portion not coated with the electrode active material, and includesa first support portion configured to support an area corresponding to the uncoated portion of the electrode and including a laser receiving portion at a location corresponding to an irradiation area of a laser for cutting the uncoated portion; and a second support potion configured to support an area corresponding to the coated portion of the electrode.

The laser receiving portion may be a hole passing through the first support portion or a groove formed in the first support portion to a predetermined depth.

The first support portion may be extended from one end of the second support portion along a second direction approximately perpendicular to the first direction.

An extended length of the first support portion along the second direction may be equal to or longer than a distance from a boundary between the uncoated portion and the coated portion to an end of the uncoated portion before the laser cutting.

One surface of the jig in contact with the electrode may be configured to have a predetermined curvature along a direction parallel to the first direction.

The jig may have a coating layer on one surface in contact with the electrode.

An extended length of the second support portion along a second direction perpendicular to the first direction may be equal to or longer than a distance from a boundary between the uncoated portion and the coated portion to an end of the coated portion.

The second support portion may be configured to float the electrode on the second support portion.

The second support portion may have an air floating hole.

The jig may include an air blower at a location corresponding to the air floating hole.

The first support portion may have a coating layer on one surface in contact with the electrode.

The first support portion may include an impurity discharge portion on two sides of the laser receiving portion along the first direction.

The jig may include a suction portion at an area corresponding to the impurity discharge portion.

An electrode manufacturing system according to an embodiment of the present disclosure may include the jig according to an embodiment of the present disclosure; and a laser irradiation device at a location corresponding the laser receiving portion.

The laser irradiation device may be configured to form a notching pattern repeated on the uncoated portion along the first direction by partially cutting the uncoated portion.

### Advantageous Effects

According to an aspect of the present disclosure, it may be possible to minimize movements of the electrode during transport of the electrode in electrode machining.

According to another aspect of the present disclosure, it may be possible to prevent an excessive increase in space occupied by the machine.

According to another aspect of the present disclosure, it may be possible to prevent damage of the machine induced by laser irradiation.

According to another aspect of the present disclosure, it may be possible to prevent cutting incomplete by laser irradiation.

According to another aspect of the present disclosure, it may be possible to prevent damage to the machine due to friction in transport of the electrode.

However, the advantageous effect obtained through the present disclosure is not limited to the above-described effects, and these and other advantageous effects will be clearly understood by those skilled in the art from the following description.

### DESCRIPTION OF DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a diagram schematically showing a drum type machine for laser cutting according to the related art.
FIG. 2 is a diagram schematically showing a flying type machine for laser cutting according to the related art.
FIG. 3 is a diagram conceptually showing a jig of the present disclosure.
FIG. 4 is a diagram showing an electrode cut by a jig and an electrode manufacturing system of the present disclosure.
FIG. 5 is a plan view of a jig of the present disclosure.
FIG. 6 is a diagram illustrating a process of partially cutting an electrode supported by a jig of the present disclosure by laser irradiation, showing a cross section of the jig of FIG. 5 taken along the line X-X'.
FIG. 7 is a diagram showing a jig with a laser receiving portion having a different structure compared to the jig shown in FIG. 5.
FIGS. 8 and 9 are diagrams showing a jig of the present disclosure and an electrode when viewed from the bottom of the jig.
FIG. 10 is a diagram showing an electrode floating by a jig of the present disclosure.
FIG. 11 is a diagram showing a structure of a second support portion for floating an electrode.
FIG. 12 is a diagram showing an air blower for floating an electrode.
FIG. 13 is a diagram showing a friction prevention structure present in each of a first support portion and a second support portion.
FIG. 14 is a diagram showing an impurity discharge portion of a jig of the present disclosure.
FIG. 15 is a diagram showing a suction portion of a jig of the present disclosure.
FIG. 16 is a diagram conceptually showing an electrode manufacturing system of the present disclosure.
FIG. 17 is a diagram exemplarily showing a movement of a laser irradiation device of the present disclosure for forming a cutting line in an electrode.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation. Therefore, the embodiments described herein and illustrations in the accompanying drawings are exemplary embodiments of the present disclosure to describe the technical aspect of the present disclosure and are not intended to be limiting, and thus it should be understood that a variety of other equivalents and modifications could have been made thereto at the time that the application was filed.

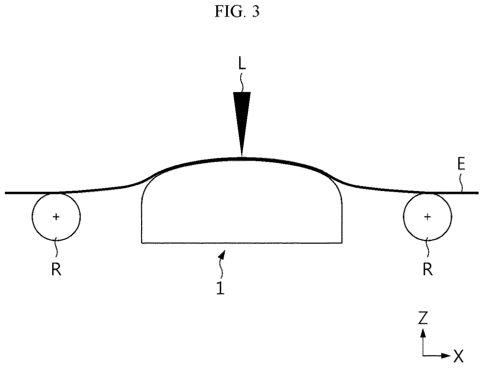

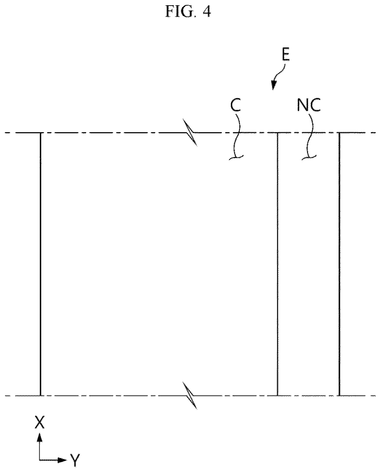

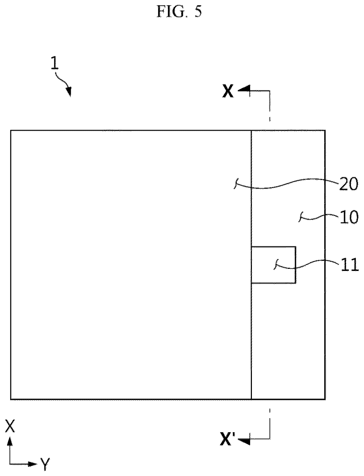

A jig 1 according to an embodiment of the present disclosure will be described with reference to FIGS. 3 to 5. FIG. 3 is a diagram conceptually showing the jig of the present disclosure, FIG. 4 is a diagram showing an electrode cut by the jig and an electrode manufacturing system of the present disclosure, and FIG. 5 is a plan view of the jig of the present disclosure.

Referring to FIGS. 3 to 5, the jig 1 according to an embodiment of the present disclosure may be configured to support the electrode E which is transported along a first direction (parallel to the X axis). At least one roller R may be present along the transport direction of the electrode E to stably transport the electrode E. The roller R may guide the transport of the electrode E. The roller R may be a guide roller, and may be a rotatable drive roller connected to a driving device.

The jig 1 may be configured to support the electrode E including a coated portion C coated with an electrode active material and an uncoated portion NC not coated with the electrode active material. The jig 1 may include a first support portion 10 and a second support portion 20.

The first support portion 10 may be configured to support an area corresponding to the uncoated portion NC of the electrode E. The first support portion 10 may be extended from one end of the second support portion 20 to a predetermined length along a second direction (parallel to the Y axis) approximately perpendicular to the first direction (parallel to the X axis).

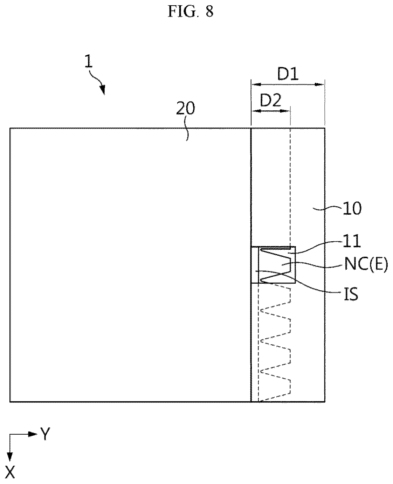

An extended length D1 (see FIG. 8) of the first support portion 10 along the second direction may be equal to or longer than a distance from the boundary between the uncoated portion NC and the coated portion C to the end of the uncoated portion NC before laser cutting. That is, an extended width (an extended length in the direction parallel to the Y axis) of the first support portion 10 may be equal to or longer than the height (the extended length in the Y axis direction) of the uncoated portion NC of the electrode E before cutting. Accordingly, the first support portion 10 may stably support the entire uncoated portion NC during transport of the electrode E. However, the first support portion 10 of the present disclosure is not limited as being configured to support only the uncoated portion NC. That is, in addition to the uncoated portion NC, the first support portion 10 of the present disclosure may be configured to support a part of the coated portion C.

The second support portion 20 may be configured to support an area corresponding to the coated portion C of the electrode E. An extended length of the second support portion 20 along the second direction (parallel to the Y axis) may be equal to or longer than a distance from the boundary between the uncoated portion NC and the coated portion C to the end of the coated portion C. That is, an extended width (an extended length in the direction parallel to the Y axis) of the second support portion 20 may be equal to or longer than a height (an extended length in the Y axis direction) of the coated portion C of the electrode E. Accordingly, the second support portion 20 may stably support the entire coated portion C during transport of the electrode E. However, the second support portion 20 of the present disclosure is not limited as being configured to support only the coated portion C. That is, in addition to the coated portion C, the second support portion 20 of the present disclosure may be configured to support a part of the uncoated portion NC.

The first support portion 10 may include a laser receiving portion 11 at a location corresponding to an irradiation area of the laser L for cutting of the uncoated portion NC. The electrode E supported by the jig 1 of the present disclosure may be, for example, a two-side coated electrode in which the electrode active material is coated on two surfaces of an electrode current collector.

As described above, when the jig 1 of the present disclosure includes the laser receiving portion 11, it may be possible to achieve complete cutting by allowing the laser L to pass through the uncoated portion NC in cutting into a desired pattern by irradiation of the laser L onto the uncoated portion NC. In case where the jig 1 does not include the laser receiving portion 11, since one surface of the electrode E irradiated with the laser L and the opposite surface are supported by the jig 1, the laser L does not pass through the electrode E, resulting in incomplete cutting.

In another aspect, by this configuration of the present disclosure, it may be possible to prevent damage to the surface of the jig 1 by the laser L passing through the uncoated portion NC, thereby increasing the service life of the machine and preventing damage to the electrode E passing through the damaged surface of the jig 1. Meanwhile, in the present disclosure, the target for laser cutting is not limited to only the uncoated portion NC. That is, in the present disclosure, in addition to the uncoated portion NC, the target for laser cutting may include a part of the coated portion C.

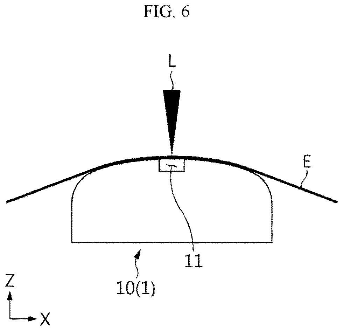

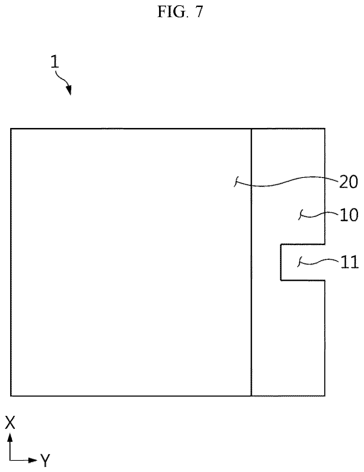

Subsequently, the shape of the laser receiving portion 11 of the present disclosure will be described with reference to FIGS. 6 and 7 together with FIG. 5. FIG. 6 is a diagram illustrating a process of partially cutting the electrode supported by the jig of the present disclosure by laser irradiation, showing a cross section of the jig of FIG. 5, taken along the line X-X'. FIG. 7 is a diagram showing the jig with the laser receiving portion having a different structure compared to the jig shown in FIG. 5.

First, referring to FIGS. 5 and 6, the laser receiving portion 11 may be a hole passing through the first support portion 10, and may be a groove formed in the first support portion 10 to a predetermined depth.

When the laser receiving portion 11 is a hole, the jig 1 may not be damaged by the laser L irradiation. When the laser receiving portion 11 is a groove, the laser L irradiation may damage the inner surface of the groove. However, also in this case, the electrode E and the damaged part of the jig 1 do not come into contact with each other during transport of the electrode E, and there is no damage risk of the electrode E.

Referring to FIG. 7, the laser receiving portion 11 may be notched inward from the outer end of the first support portion 10 in the widthwise direction (parallel to the Y axis). The notched shape of the laser receiving portion 11 may be applied to both when the laser receiving portion 11 is a groove and when the laser receiving portion 11 is a hole.

Referring back to FIGS. 3 to 6, one surface of the jig 1 in contact with the electrode E may be configured to have a predetermined curvature along the direction parallel to the first direction or the transport direction of the electrode E. The first support portion 10 and the second support portion 20 may have approximately the same curvature.

When one surface of the jig 1 has the above-described curvature, the electrode E may come into close contact with one surface of the jig 1 when the electrode E passes through the jig 1. When the electrode E does not come into close contact with the jig 1 in the process of cutting the uncoated portion NC by the laser L irradiation, it may be difficult to accurately irradiate the laser L onto a desired location. In particular, when wrinkles occur in the electrode E, the cutting quality may degrade due to inaccurate focusing of the laser L.

The radius of curvature of one surface of the jig 1 in contact with the electrode E may be in a range between about 400 mm to 800 mm. When the radius of curvature is too small, there may be a large difference in focal length of the laser L for each cutting location when cutting the uncoated portion NC by the laser L irradiation, and the cutting quality may be different for each cutting location. On the contrary, when the radius of curvature is too large, it may fail to bring the electrode E into close contact with the surface of the jig 1, and movements may occur during transport.

As described above, when the jig 1 is configured to have the curvature on the surface, the laser receiving portion 11 may be formed at the highest location along the heightwise direction (parallel to the Z axis) of the jig 1. Although FIG. 3 shows that the roller R guiding the transport of the electrode E is disposed under the electrode E, the present disclosure is not limited thereto. The roller R may be disposed on the electrode E on one side and the other side of the jig 1 along the transport direction (parallel to the X axis) of the electrode E. In this case, the roller R may be disposed under the highest location along the heightwise direction (parallel to the Z axis) of the jig 1. In this case, tension may occur in the electrode E by the roller R, and accordingly the electrode E may come into close contact with the jig 1 at the location of the laser receiving portion 11.

Although not shown in the drawing, the jig 1 of the present disclosure may have a coating layer on one surface in contact with the electrode E. The coating layer may be configured to have wear resistant characteristics and/or friction reduction characteristics. The surface of the jig 1 of the present disclosure may be damaged by the repeated friction with the electrode E during transport of the electrode E. In another aspect, the coated portion C of the electrode E may be damaged, such as separation of the electrode active material due to the friction during transport of the electrode E.

When the jig 1 has the coating layer having wear resistant characteristics and/or friction reduction characteristics on at least part of the surface, it may be possible to minimize damage to the electrode E and/or damage to the jig 1 due to the friction.

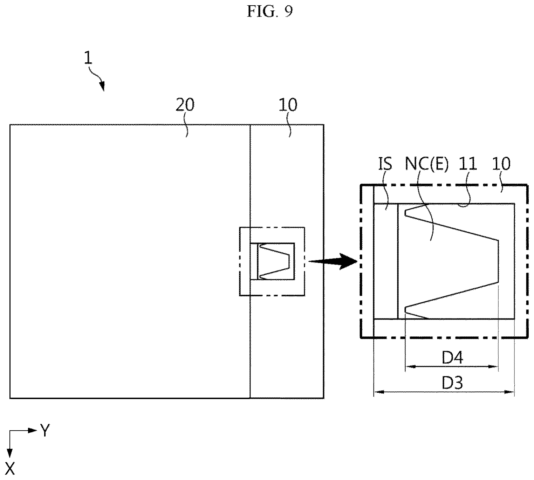

Subsequently, the relationship between the extended width D1 of the first support portion 10, the height D2 of the uncoated portion NC after laser cutting, the extended width D3 of the laser receiving portion 11 and the notching depth D4 of the uncoated portion NC by laser cutting in the present disclosure will be described with reference to FIGS. 8 and 9. FIGS. 8 and 9 are diagrams showing the jig of the present disclosure and the electrode when viewed from the bottom of the jig.

Referring to FIGS. 8 and 9, the extended width D1 of the first support portion 10 may be determined in view of the total height (the extended length along the direction parallel to the Y axis) of the uncoated portion NC before laser cutting and the height D2 (the extended length along the direction parallel to the Y axis) of the uncoated portion NC after laser cutting. As described above, the extended width D1 of the first support portion 10 may be approximately equal to or longer than the total height of the uncoated portion NC before laser cutting in view of transport stability of the electrode E.

Meanwhile, the extended width D3 (the extended length along the direction parallel to the Y axis direction) of the laser receiving portion 11 may be determined in view of the notching depth D4 of the uncoated portion NC by laser cutting. Since the electrode E only moves in the first direction (parallel to the X axis), the extended width D3 of the laser receiving portion 11 may be greater than the notching depth of the uncoated portion NC by laser cutting. When this condition is satisfied, it may be possible to smoothly perform the process of cutting the uncoated portion NC passing through the laser receiving portion 11 into a desired pattern.

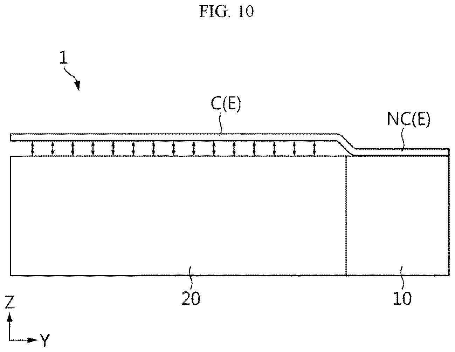

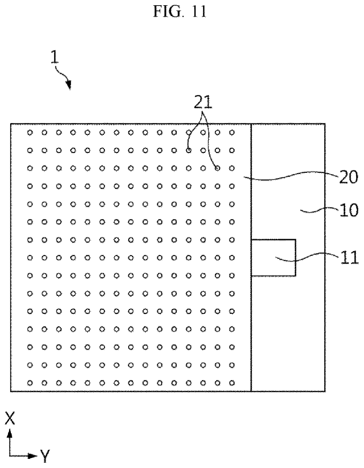

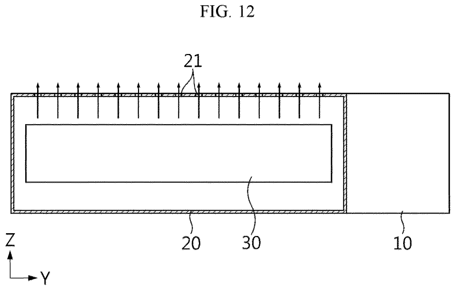

Subsequently, the floating function of the jig 1 of the present disclosure will be described with reference to FIGS. 10 to 12. FIG. 10 is a diagram showing the electrode floating by the jig of the present disclosure, and FIG. 11 is a diagram showing the structure of the second support portion for floating the electrode. Additionally, FIG. 12 is a diagram showing an air blower for floating the electrode.

Referring to FIGS. 10 to 12, the second support portion 20 of the present disclosure may be configured to float the electrode E on the second support portion 20. In this case, as shown in FIG. 10, the electrode may pass through the jig 1 while it is floating on the second support portion 20 during transport without contact between the coated portion C and the jig 1. That is, the second support portion 20 may support the coated portion C, for example, by floating the coated portion C by air pressure, without direct contact with the coated portion C. When the coated portion C is configured in noncontact with the second support portion 20, it may be possible to prevent damage/separation of the electrode active material due to the friction during transport of the electrode E.

For example, the second support portion 20 may have an air floating hole 21. A plurality of air floating holes 21 may be present. The jig 1 may include an air blower 30 at a location corresponding to the air floating hole 21. The air blower 30 may be configured to provide pressure for floating to the coated portion C through the air floating hole 21. Accordingly, the coated portion C may be kept spaced at a very short distance apart from the jig 1 during transport of the electrode E. In contrast, the uncoated portion NC of the electrode E may pass through the area of the laser receiving portion 11 while it is in close contact with the first support portion 10, thereby ensuring good laser cutting.

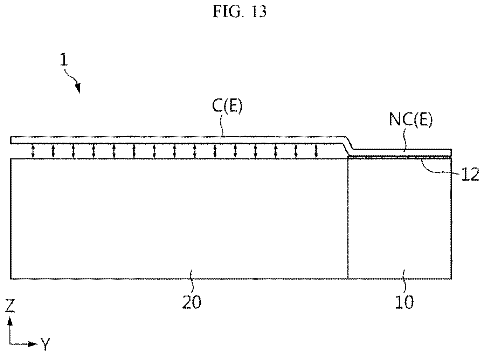

Subsequently, the coating layer 12 formed on the first support portion 10 will be described with reference to FIG. 13. FIG. 13 is a diagram showing the friction prevention structure formed in each of the first support portion and the second support portion.

Referring to FIG. 13, the first support portion 10 may have the coating layer 12 on one surface in contact with the electrode E. When the second support portion 20 is configured to float the electrode E, the coating layer 12 may be only formed on the first support portion 10. The coating layer 12 may be configured to have wear resistant characteristics and/or friction reduction characteristics. The electrode E may be transported in close contact between the uncoated portion NC and the first support portion 10 for good laser cutting. Accordingly, with the coating layer 12 having wear resistant characteristics and/or friction reduction characteristics on the first support portion 10, it may be possible to minimize damage to the electrode E and/or the jig 1 due to the friction between the uncoated portion NC and the first support portion 10.

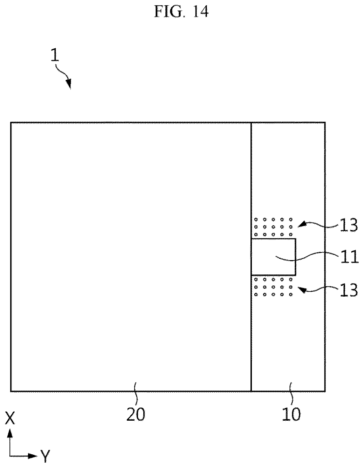

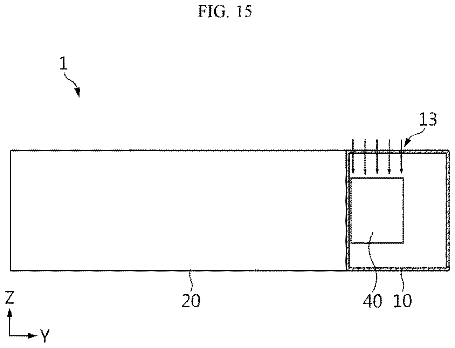

Subsequently, an impurity discharge function of the jig 1 of the present disclosure will be described with reference to FIGS. 14 and 15. FIG. 14 is a diagram showing an impurity discharge portion of the jig of the present disclosure, and FIG. 15 is a diagram showing a suction portion of the jig of the present disclosure.

First, referring to FIG. 14, the first support portion 10 may include the impurity discharge portion 13 on two sides of the laser receiving portion 11 along the first direction (parallel to the X axis). The impurity discharge portion 13 may include a plurality of impurity discharge holes passing through the first support portion 10. When the first support portion 10 includes the impurity discharge portion 13, it may be possible to minimize the increase of transport friction of the electrode E due to the buildup of impurities such as molten fumes from laser cutting near the laser receiving portion 11.

Referring to FIG. 15 together with FIG. 14, the jig 1 may include the suction portion 40 at an area corresponding to the impurity discharge portion 13. For example, the suction portion 40 may be disposed on the inner side of the jig 1. The suction portion 40 may force impurities such as molten fumes from laser cutting out of the jig 1 through the suction portion 40 via the impurity discharge portion 13. When the jig 1 of the present disclosure includes the suction portion 40, it may be possible to prevent the buildup of molten fumes near the laser receiving portion 11 more efficiently, thereby improving the quality of the electrode E and/or the life of the jig 1.

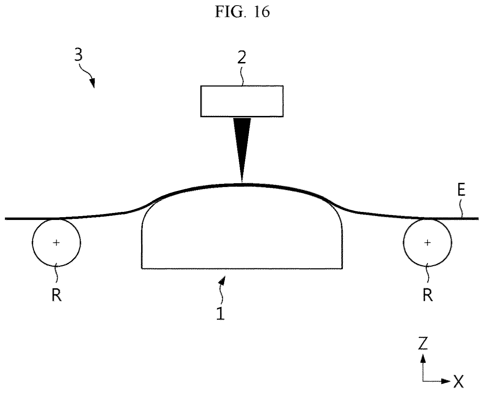

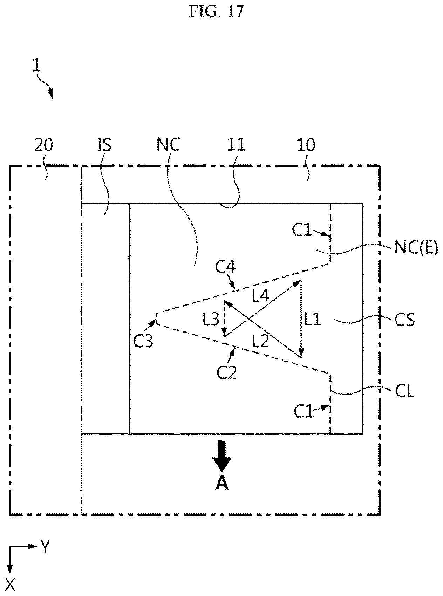

Subsequently, an electrode manufacturing system of the present disclosure will be described with reference to FIGS. 16 and 17. FIG. 16 is a diagram conceptually showing the electrode manufacturing system of the present disclosure, and FIG. 17 is a diagram exemplarily showing a movement of a laser irradiation device of the present disclosure for forming a cutting line in the electrode.

Referring to FIG. 16, the electrode manufacturing system 3 of the present disclosure may include the jig 1 of the present disclosure as described above and the laser irradiation device 2 at a location corresponding to the laser receiving portion 11 of the jig 1. The electrode manufacturing system 3 may include the roller R to stably transport the electrode E along the first direction (parallel to the X axis). The roller R may be configured to guide the transport of the electrode E or provide power for transporting the electrode E.

Referring to FIG. 17 together with FIG. 16, the laser irradiation device 2 may be configured to form a repeated notching pattern on the uncoated portion NC along the first direction (parallel to the X axis) by partially cutting the uncoated portion NC of the electrode E.

For example, during transport of the electrode E along the direction A, a laser irradiation point by the laser irradiation device 2 may repeatedly move in approximately a ribbon shape along paths L1, L2, L3 and L4 in a sequential order. The movement along the path L1 may be a movement in the same direction as the direction A. The movement along the path L2 may be a movement in a direction opposite to the direction A and a direction facing the second support portion 20. The movement along the path L3 may be a movement in the same direction as the direction A. A movement distance along the path L3 may be shorter than a movement distance along the path L1. The movement along the path L4 may be a movement in a direction opposite to the direction A and a direction facing away from the second support portion 20. A movement distance along the path L4 may be approximately substantially the same as a movement distance along the path L2.

As the laser irradiation point by the laser irradiation device 2 moves along the paths L1, L2, L3, L4 in a sequential order, the cutting line CL having a specific pattern may be formed in the electrode E moving along the direction A. A first cutting line C1 may be formed by the movement path L1 of the laser irradiation point. A second cutting line C2 may be formed by the movement path L2 of the laser irradiation point. A third cutting line C3 may be formed by the movement path L3 of the laser irradiation point. A fourth cutting line C4 may be formed by the movement path L4 of the laser irradiation point. A cut segment CS formed by the cutting line CL may be, for example, removed by a separate suction machine.

When the transport speed of the electrode E along the direction A is faster than the movement speed of the irradiation point of the laser irradiation device 2, an approximately rectangular uncoated portion segment having a longer bottom side and a shorter top side may be formed by the cutting of the uncoated portion NC with the movement of the laser irradiation point.

However, the transport direction and speed of the electrode E and the movement direction and speed of the laser irradiation point are provided by way of example, and the present disclosure is not limited thereto.

While the present disclosure has been hereinabove described with regard to a limited number of embodiments and drawings, the present disclosure is not limited thereto, and it is apparent that a variety of changes and modifications may be made by those skilled in the art within the technical aspect of the present disclosure and the appended claims and their equivalents.

### [Reference Numerals]

L: Laser
E: Electrode
C: Coated portion
NC: Uncoated portion
CS: Cut segment
CL: Cutting line
C1: First cutting line
C2: Two cutting line
C3: Third cutting line
C4: Fourth cutting line
A: Transport direction of electrode
IS: Insulation portion
R: Roller
1: Jig
10: First support portion
11: Laser receiving portion
12: Wear resistant coating layer
13: Impurity discharge portion
D 1: Extended width of first support portion
D2: Height of uncoated portion after laser cutting
D3: Extended width of laser receiving portion
D4: Notching depth of uncoated portion by laser cutting
20: Second support portion
21: Air floating hole
30: Air blower
40: Suction portion
2: Laser irradiation device
L1-L4: Movement path of laser irradiation point by laser irradiation device
3: Electrode manufacturing system

## Claims

1. A jig configured to support an electrode which is transported along a first direction, the electrode including a coated portion coated with an electrode active material and an uncoated portion not coated with the electrode active material, the jig comprising:
a first support portion configured to support an area corresponding to the uncoated portion of the electrode, and including a laser receiving portion at a location corresponding to an irradiation area of a laser for cutting the uncoated portion; and
a second support potion configured to support an area corresponding to the coated portion of the electrode.

2. The jig according to claim 1, wherein the laser receiving portion is a hole passing through the first support portion or a groove formed in the first support portion to a predetermined depth.

3. The jig according to claim 1, wherein the first support portion is extended from one end of the second support portion along a second direction approximately perpendicular to the first direction.

4. The jig according to claim 3, wherein an extended length of the first support portion along the second direction is equal to or longer than a distance from a boundary between the uncoated portion and the coated portion to an end of the uncoated portion before the laser cutting.

5. The jig according to claim 1, wherein one surface of the jig in contact with the electrode is configured to have a predetermined curvature along a direction parallel to the first direction.

6. The jig according to claim 1, wherein the jig has a coating layer on one surface in contact with the electrode.

7. The jig according to claim 1, wherein an extended length of the second support portion along a second direction perpendicular to the first direction is equal to or longer than a distance from a boundary between the uncoated portion and the coated portion to an end of the coated portion.

8. The jig according to claim 1, wherein the second support portion is configured to float the electrode on the second support portion.

9. The jig according to claim 8, wherein the second support portion has an air floating hole.

10. The jig according to claim 9, wherein the jig includes an air blower at a location corresponding to the air floating hole.

11. The jig according to claim 8, wherein the first support portion has a coating layer on one surface in contact with the electrode.

12. The jig according to claim 1, wherein the first support portion includes an impurity discharge portion on two sides of the laser receiving portion along the first direction.

13. The jig according to claim 12, wherein the jig includes a suction portion at an area corresponding to the impurity discharge portion.

14. An electrode manufacturing system, comprising:
the jig according to any one of claims 1 to 13; and
a laser irradiation device at a location corresponding the laser receiving portion.

15. The electrode manufacturing system according to claim 14, wherein the laser irradiation device is configured to form a notching pattern repeated on the uncoated portion along the first direction by partially cutting the uncoated portion.
